# FASCICULE DE BREVET EUROPEEN

(11) **EP 3 359 870 B1**
(45) Date de publication et mention de la délivrance du brevet: **19.07.2023**
(21) Numéro de dépôt: 16790697.3
(22) Date de dépôt: 06.10.2016
(51) Int. Cl.: F17D 5/06

(54) **CHARIOT MODULAIRE POUR L'ENREGISTREMENT DE DONNEES MAGNETIQUE DE TERRAIN NOTAMMENT POUR LE CONTROLE NON INVASIF DE PIPELINES OU SIMILAIRES**
MODULARER WAGEN ZUR AUFZEICHNUNG MAGNETISCHER GELÄNDEDATEN, INSBESONDERE ZUR NICHTINVASIVEN INSPEKTION VON ROHRLEITUNGEN ODER DERGLEICHEN
MODULAR CART FOR RECORDING MAGNETIC TERRAIN DATA, NOTABLY FOR THE NON-INVASIVE INSPECTION OF PIPELINES OR THE LIKE

(30) Priorité: 09.10.2015 FR 1559634
(43) Date de publication de la demande: 15.08.2018
(73) Titulaire: SKIPPER NDT, 75116 Paris (FR)
(72) Inventeur: FINAS, Mathieu, 75020 Paris (FR)
(74) Mandataire: RVDB
(86) Numéro de dépôt international: PCT/IB2016/055987
(87) Numéro de publication internationale: WO 2017/060846

(56) Documents cités:
- EP-A2- 1 074 674
- CA-A- 1 161 115
- DE-A1- 2 530 589
- DE-A1-102006 028 421

## Description

### DOMAINE TECHNIQUE

La présente invention concerne un chariot modulaire pour l'enregistrement de données magnétique de terrain notamment pour le contrôle non invasif de pipelines, structures métalliques enterrées, ou aériennes, câbles électriques ou similaires.

L'invention a principalement pour application un chariot permettant de suivre le cheminement des pipelines ou conduites de gaz ou liquides pétroliers sur des terrains naturels afin de surveiller l'état de la conduite et de détecter d'éventuelles dégradations ou fuites.

Toutefois cette application n'est pas limitative et le chariot pourra également être utilisé sur d'autres types de conduite et par exemple des conduites d'eau, et sur d'autres types de terrain et notamment sur des terrains urbains ou artificiels.

### ART ANTERIEUR

Compte tenu à la fois des risques d'accidents et des conditions normatives, les exploitants de pipelines doivent régulièrement vérifier l'état de leur réseau. A cet effet, on connaît deux méthodes principales à savoir une vérification par l'intérieur de la conduite ou une vérification externe. Le document EP1074674 A2 décrit un chariot modulaire pour l'enregistrement de données magnétiques de terrain.

La vérification par l'intérieur s'effectue en général par un robot pouvant à la fois, pour certains d'entre eux, vérifier et même réparer la surface de la conduite. Ce type de contrôle interne est avantageux, toutefois, les robots ne sont pas adaptés à tous les types de conduites notamment celles présentant des diamètres restreints, des rétrécissements, des surfaces internes trop irrégulières ou recevant des vannes, ou encore des sections coudées trop importantes.

La vérification par l'extérieur s'effectue en suivant en surface le cheminement de la conduite à l'aide d'un dispositif muni de capteurs et en recherchant des anomalies représentatives d'un mauvais état ou d'une dégradation de la conduite. Différents types de capteurs peuvent être utilisés pour cette analyse non destructive et notamment des magnétomètres afin d'enregistrer le champ magnétique à proximité du pipeline, de préférence à son aplomb. Cette technique par détection magnétique passivée, basée sur l'effet Villari, est très satisfaisante à condition de pouvoir effectuer des relevés ou des enregistrements précis.

A ce jour ces relevés sont effectués par un opérateur se déplaçant avec un harnais ou un sac à dos permettant le transport à la fois du système de détection avec les capteurs, du système de géolocalisation et de l'alimentation de l'ensemble. Si ce système de harnais rend possible le déplacement de l'opérateur sur des terrains difficilement praticables, il présente l'inconvénient de rendre imprécises, voire de fausser, les mesures des magnétomètres. Cette imprécision est due notamment au positionnement rapproché des capteurs entre eux, à la difficulté de les maintenir dans un même plan de déplacement compte tenu des mouvements du harnais par rapport à l'utilisateur et au déplacement de l'utilisateur lui-même.

La mesure des magnétomètres est également modifiée par la présence sur l'opérateur d'éléments modifiant le champ magnétique et notamment des objets électriques et électroniques tels que l'alimentation et le système de localisation.

La présente invention se situe dans le domaine de la surveillance de pipelines ou similaires et constitue une solution avantageuse de remplacement des dispositifs de harnais conçus pour le transport des appareils de mesure et de surveillance non destructive des pipelines par l'extérieur et particulièrement par la technique de surveillance magnétique passive ou active c'est-à-dire avec une transmission d'ondes magnétiques dans le pipeline.

### OBJET DE L'INVENTION

Un premier but de la présente invention est de résoudre tout ou partie des problèmes techniques liés à l'art antérieur précité.

Un autre but de la présente invention est de proposer un chariot modulaire permettant le déplacement des éléments de mesure sur différents terrains par roulage ou portage.

Un autre but de la présente invention est de proposer un chariot modulaire dans lequel les capteurs permettant l'enregistrement sont positionnés et orientés de manière précise et stable.

Un autre but de la présente invention est de proposer un chariot modulaire dans lequel la mesure des capteurs n'est pas modifiée par les objets électriques et/ou électroniques disposés sur l'opérateur ou encore par les éléments structurels du chariot.

### RESUME DE L'INVENTION

L'invention vise à protéger un chariot modulaire pour l'enregistrement de données magnétiques de terrain notamment pour le contrôle non invasif de pipelines ou similaires. Selon l'invention ledit chariot comprend un châssis articulé monté sur roues comprenant :
- des moyens de réception d'un dispositif d'enregistrement du champ magnétique couplé à des capteurs,
- un cadre arrière permettant la manipulation du chariot par un opérateur,
- au moins au moins deux barres de positionnement équipées de logements pour l'assujettissement des capteurs selon respectivement un premier et un second axe, les barres de positionnement formant un plan de détection P sensiblement perpendiculaire au sens de déplacement du chariot.

### BREVE DESCRIPTION DES FIGURES

La présente invention sera mieux comprise à la lecture d'un exemple détaillé de réalisation en référence aux figures annexées, fournies à titre d'exemple non limitatif, parmi lesquels :
- la figure 1 représente un exemple de réalisation schématique d'un dispositif conforme à l'invention, en vue de perspective, selon une première configuration dite de roulage,
- la figure 2 représente l'exemple de réalisation de la figure 1 dans une seconde configuration dite de portage,
- la figure 3 représente l'exemple de réalisation de la figure 1 dans une seconde configuration dite de portage double.

### DESCRIPTION DETAILLEE DE L'INVENTION

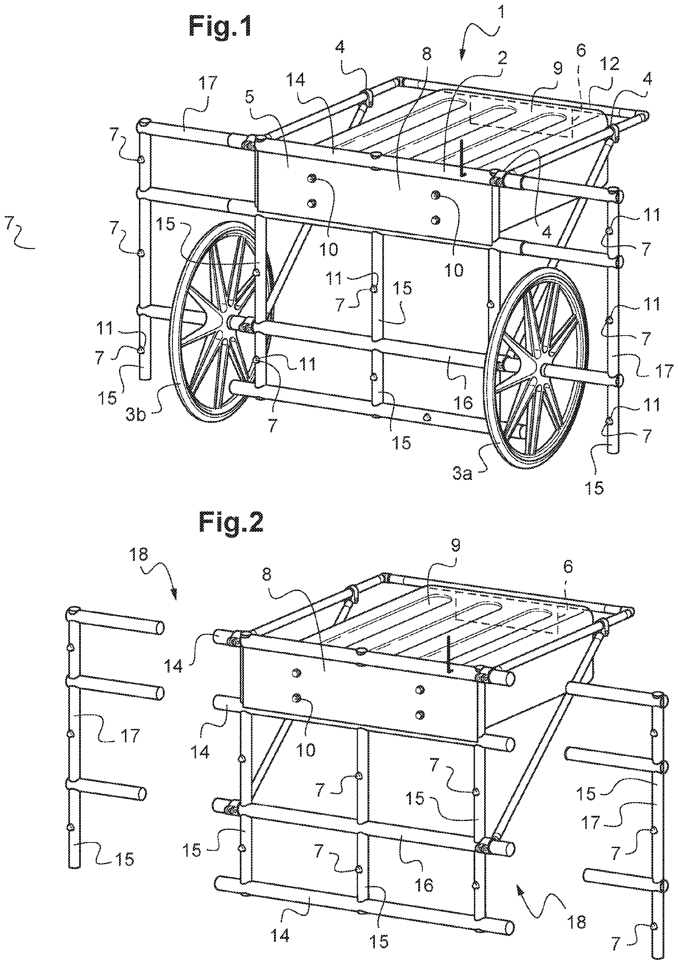

La présente invention vise à protéger un chariot modulaire, en se reportant principalement à la figure 1 on voit représenté, sous forme schématique un exemple de réalisation de ce chariot modulaire 1 dans sa configuration dite de roulage, c'est-à-dire un chariot 1 dans lequel le châssis 2 comprend deux roues 3a et 3b.

En se reportant à la figure 2, on voit ce même chariot modulaire 1 auquel les roues 3a et 3b ont été retirées correspondant à la configuration de portage simple.

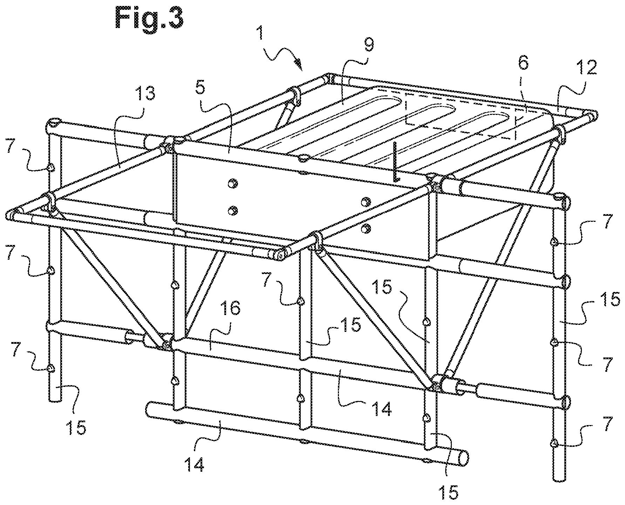

Enfin en se reportant à la figure 3, on voit ce même chariot modulaire 1 auquel les roues 3a et 3b ont également été retirées mais en configuration de portage double.

D'autres configurations sont également possibles et notamment une configuration en portage double, dans laquelle les roues 3a et 3b sont maintenues fixées sur le châssis 2.

Le choix de la configuration se fait en fonction de la nature du terrain sur laquelle sera réalisé le contrôle et du nombre d'opérateurs disponibles, le passage d'une configuration à une autre étant rapide et fiable.

A titre d'exemple, on privilégiera la configuration de roulage lorsque le terrain est relativement plat et que les sections de portage sont courtes.

La configuration de portage simple sera particulièrement adaptée aux terrains non plans et relativement court ou lorsqu'un second opérateur n'est pas disponible
Par exemple lorsque ce dernier effectue des recherches en amont pour déterminer la position du pipeline.

La configuration en portage double est particulièrement adaptée lorsque le contrôle s'effectue sur un terrain dégagé non plan. Lorsque le contrôle alterne entre sections non planes et planes, on prévoit une configuration en double portage avec des roues 3a et 3b permettant de soulager les opérateurs.

En se reportant à nouveau à la figure 1, on voit que le châssis 2 est articulé et monté sur roues.

Les moyens d'articulations ou articulations 4 permettent le repli des différents éléments du châssis 2 les uns sur les autres ce qui permet de réduire l'encombrement du chariot 1 notamment lors de son stockage.

Dans l'exemple de réalisation des figures annexées, le chariot 1 comporte des roues 3a et 3b amovibles, toutefois dans une variante de réalisation on choisira pour plus de simplicité de construction un châssis 2 équipé des roues fixes.

Le châssis 2 comprend en outre des moyens de réception 5 d'un dispositif d'enregistrement 6 du champ magnétique couplé à des capteurs 7.

Ces moyens de réception 5 permettent la fixation sur une plaque support 8 au moyen de vis avantageusement non métallique et notamment plastique, d'un coffre 9 regroupant le dispositif d'enregistrement 6 incluant les moyens d'analyse, un afficheur et/ou une interface homme machine, un système de positionnement de type GPS, couplé avec une centrale inertielle, une liaison sans fil de type wifi.

Avantageusement pour limiter le poids et les interférences, différents éléments placés dans le coffre 9 et notamment les moyens d'alimentation sont déportés et notamment peuvent être logés dans un sac à dos porté par un opérateur.

Les moyens de réception 5 comportent également des logements 11 répartis sur le châssis 2 en des points déterminés et permettant de réceptionner les capteurs 7.

A titre d'exemple les logements 11 sont taraudés de manière à venir fixer les capteurs 7 en les vissant dans les logements 11, les capteurs 7 étant à cet effet montés sur des douilles filetées. De cette manière les capteurs 7, tels que des magnétomètres sont orientés de manière précise et fixes les uns par rapport aux autres.

En se reportant indifféremment aux figures 1 à 3, on voit que le châssis comprend un cadre arrière 12. Ce cadre arrière 12 permet la manipulation du chariot 1 par un opérateur placé derrière ce dernier, soit en permettant de pousser sur ce dernier soit en constituant une prise pour soulever le chariot 1.

En se reportant cette fois à la figure 3, on voit que dans la configuration de double portage, le chariot 1 est également équipé d'un cadre avant 13. Ce cadre avant 13 permet à un second opérateur de tenir le chariot 1 de sorte que ce dernier peut être soulevé de manière analogue à un brancard. En cas de roulage (une fois positionnées les roues), il permet également de permettre en fonction de la position de l'opérateur une traction ou une poussée sur le chariot 1 afin de partager l'effort avec l'opérateur placé en arrière du chariot 1 et assurer son déplacement.

Comme représenté à la figure 3, le cadre avant 13 comprend, à l'instar du cadre arrière 12 une articulation 4, de sorte que l'on peut rabattre le cadre avant 13 sur le reste du châssis 2 lorsque l'on repasse en configuration simple portage. Cette articulation 4 permet également le retrait du cadre avant 13 pour se placer dans une configuration allégée telle que représentée à la figure 2.

Le châssis 2 comprend des barres de support 14 permettant la fixation des barres de positionnement 15. Dans l'exemple de réalisation les barres de support 14 sont disposées sensiblement à l'horizontale tandis que les barres de positionnement 15 permettant la réception des capteurs 7 sont disposées sensiblement verticalement. Dans un autre mode de réalisation cette disposition pourrait toutefois être inversée et les barres de positionnement dans cet autre mode seraient disposées sensiblement horizontalement.

De manière avantageuse, de manière à réduire le poids de l'ensemble tout en assurant une bonne rigidité, chaque cadre 12 ,13 est constitué de trois tubes creux non métalliques, une des tubes constituant une barre de maintien.

Il est important de noter que d'une manière générale, les éléments longilignes du châssis 2, seront également réalisés avantageusement à partir de tubes creux et en matériau non métallique et notamment plastique.

Le châssis 2 comprend au moins une barre de positionnement 15 équipée de logements 11 permettant l'assujettissement des capteurs 7 selon un axe, sensiblement vertical au sol.

Dans l'exemple de réalisation des figures 1 à 3 le châssis 2 comprend cinq barres de positionnement 15, reliées par des barres de support 14 ainsi qu'un essieu 16.

Dans d'autres modes de réalisation, le châssis 2 pourra ne comprendre que deux barres de positionnement 15, une barre de support 14 et un essieu 16.

Comme représenté aux figures annexées, les barres de positionnement 15, permettant l'assujettissement de capteurs 7 sont disposées selon au moins deux axes, de manière à former un plan de détection P sensiblement perpendiculaire au sens de déplacement du chariot.

Avantageusement les barres de positionnement 15 sont espacées d'au moins 0,4 m de manière à espacer les capteurs 7 et constituer une zone de détection importante, assurant par la même une meilleure précision au niveau des mesures.

A cette même fin de constituer une zone de détection agrandie on prévoit au niveau du châssis 2 deux extensions latérales 17 permettant d'augmenter l'écartement entre les capteurs 7. Le positionnement des capteurs 7 sur ces extensions 17 permet d'augmenter la surface de la zone de détection. Ces extensions comportent ainsi chacune une barre de positionnement 15 constituant la quatrième et cinquième barres de positionnement 15 du chariot 1.

Les extensions latérales 17 comportent des moyens de fixation 18 sur les extrémités des barres de support 14. Selon un mode de réalisation avantageux, les moyens de fixation 18 comportent des manchons placés sur les tubes horizontaux des extensions latérales 17, lesdits manchons venant s'insérer dans les tubes de barres de support 14 placées en vis-à-vis. D'autres modes de fixation de ces extensions latérales 17, à la portée de l'homme du métier, sont également envisageables.

En fonction des capteurs utilisés ou de la précision requise, on prévoit avantageusement un chariot modulaire 1 comportant deux à cinq barres de positionnement équipées chacune de 1 à 5 capteurs 7.

Le chariot modulaire 1 tel que précité assure une grande liberté aux opérateurs, notamment grâce à ces différentes configurations et permet d'effectuer des relevés précis indépendamment de la nature du terrain sur lequel il est transporté.

Bien entendu, d'autres caractéristiques de l'invention auraient également pu être envisagées sans pour autant sortir du cadre de l'invention définie par les revendications ci-après. A titre d'exemple dans une variante de réalisation, on prévoit des moyens de mesure d'inclinaison du châssis 2 par rapport au plan horizontal ou vertical permettant de corriger la mesure des capteurs 7.

## Revendications

1. Chariot modulaire pour l'enregistrement de données magnétiques de terrain notamment pour le contrôle non invasif de pipelines ou similaires comprenant un châssis (2) articulé monté sur roues (3a, 3b) comprenant :
- des moyens de réception (5) d'un dispositif d'enregistrement du champ magnétique couplé à des capteurs,
- un cadre arrière (12) permettant la manipulation du chariot par un opérateur, **caractérisé en ce qu'**il comprend
- au moins deux barres de positionnement équipées de logements (11) pour l'assujettissement des capteurs (7) selon respectivement un premier et un second axe, les barres de positionnement (15) formant un plan de détection P sensiblement perpendiculaire au sens de déplacement du chariot.

2. Chariot modulaire selon la revendication 1 dans lequel le châssis (2) comporte des barres de support (14) permettant la fixation des barres de positionnement (15).

3. Chariot modulaire selon l'une quelconque des revendications 1 et 2 dans lequel les moyens de réception (5) comportent des logements (11) permettant la réception en des points déterminés des capteurs (7).

4. Chariot modulaire selon la revendication 3 dans lequel les logements (11) présentent un taraudage permettant de fixer les capteurs (7) montés sur des douilles filetées dans les logements (11) par vissage.

5. Chariot modulaire selon l'une quelconque des revendications précédentes comportant deux extensions latérales (17) avec des moyens de fixation (18) sur les extrémités de ladite au moins une barre de positionnement (15), permettant d'augmenter l'écartement entre les capteurs (7).

6. Chariot modulaire selon l'une quelconque des revendications précédentes comportant en outre un cadre avant (13) avec une barre de maintien apte à permettre le déplacement du chariot par deux opérateurs.

7. Chariot modulaire selon l'une quelconque des revendications précédentes dans lequel le cadre avant et/ou arrière (12 ;13) comprend des moyens d'articulation (4) permettant son repli sur le reste du châssis (2).

8. Chariot modulaire selon l'une quelconque des revendications précédentes dans lequel le châssis (2) est constitué d'un matériau non métallique.

9. Chariot modulaire selon l'une quelconque des revendications précédentes comportant deux à quatre barres de positionnement (15) équipées chacune de 1 à 5 capteurs (7).

10. Chariot modulaire selon l'une quelconque des revendications 2 à 9 précédentes dans lequel le châssis (2) comprend des moyens de mesure de l'inclinaison du plan P par rapport au plan horizontal ou vertical permettant de corriger la mesure des capteurs (7).

## Patentansprüche

1. Modularer Wagen zur Aufzeichnung magnetischer Geländedaten, insbesondere zur nichtinvasiven Inspektion von Rohrleitungen oder dergleichen, umfassend ein gelenkiges Untergestell (2), das auf Rädern (3a, 3b) montiert ist, Folgendes umfassend:
- Mittel zur Aufnahme (5) einer Aufzeichnungsvorrichtung des Magnetfeldes, die mit Sensoren gekoppelt ist,
- einen hinteren Rahmen (12), der die Handhabung des Wagens durch einen Bediener ermöglicht, **dadurch gekennzeichnet, dass** er Folgendes umfasst
- mindestens zwei Positionierstangen, die mit Sitzen (11) zur Unterstellung der Sensoren (7) in jeweils einer ersten und einer zweiten Achse ausgerüstet sind, wobei die Positionierstangen (15) eine im Wesentlichen zur Fortbewegungsrichtung des Wagens senkrechte Detektionsebene P bilden.

2. Modularer Wagen nach Anspruch 1, wobei das Untergestell (2) Haltestangen (14) beinhaltet, die die Befestigung der Positionierstangen (15) ermöglichen.

3. Modularer Wagen nach einem der Ansprüche 1 und 2, wobei die Mittel zur Aufnahme (5) Sitze (11) beinhalten, die die Aufnahme der Sensoren (7) an bestimmten Punkten beinhalten.

4. Modularer Wagen nach Anspruch 3, wobei die Sitze (11) ein Innengewinde aufweisen, das es ermöglicht, die Sensoren (7), die auf Gewindehülsen montiert sind, durch Verschrauben in den Sitzen (11) zu befestigen.

5. Modularer Wagen nach einem der vorstehenden Ansprüche, der zwei seitliche Erweiterungen (17) mit Befestigungsmitteln (18) an den Enden der mindestens einen Positionierstange (15) beinhaltet, die eine Vergrößerung des Abstandes zwischen den Sensoren (7) ermöglichen.

6. Modularer Wagen nach einem der vorstehenden Ansprüche, weiter einen vorderen Rahmen (13) mit einer Festhaltestange beinhaltend, die imstande ist, die Fortbewegung des Wagens durch zwei Bediener zu ermöglichen.

7. Modularer Wagen nach einem der vorstehenden Ansprüche, wobei der vordere und/oder hintere Rahmen (12; 13) Gelenkmittel (4) umfasst, die dessen Einklappen zum Rest des Untergestells (2) ermöglichen.

8. Modularer Wagen nach einem der vorstehenden Ansprüche, wobei das Untergestell (2) aus einem nicht metallischen Material besteht.

9. Modularer Wagen nach einem der vorstehenden Ansprüche, zwei bis vier Positionierstangen (15) beinhaltend, die jeweils mit 1 bis 5 Sensoren (7) ausgerüstet sind.

10. Modularer Wagen nach einem der vorstehenden Ansprüche 2 bis 9, wobei das Untergestell (2) Mittel zum Messen der Neigung der Ebene P in Bezug auf die horizontale oder vertikale Ebene umfasst, die es ermöglichen, die Messung der Sensoren (7) zu korrigieren.

## Claims

1. A modular cart for recording magnetic ground data especially for non-evasively inspecting pipelines or the like comprising a hinged chassis (2) mounted on wheels (3a, 3b) comprising:
- means for receiving (5) a device for recording the magnetic field coupled with sensors,
- a rear frame (12) for enabling the cart to be handled by an operator, **characterised in that** it comprises
- at least two positioning bars equipped with housings (11) for fastening the sensors (7) along a first and a second axis respectively, the positioning bars (15) forming a detection plane P substantially perpendicular to the direction of movement of the cart.

2. The modular cart according to claim 1 wherein the chassis (2) includes support bars (4) for attaching the positioning bars (15).

3. The modular cart according to any of claims 1 to 2 wherein the reception means (5) include housings (11) for receiving the sensors (7) at determined points.

4. The modular cart according to claim 3 wherein the housings (11) have a female thread for attaching the sensors (7) mounted on male-threaded bushings in the housings (11) by screwing.

5. The modular cart according to any of the preceding claims including two side extensions (17) with attachment means (18) on the ends of said at least one positioning bar (15), for increasing spacing between the sensors (7).

6. The modular cart according to any of the preceding claims further including a front frame (13) with a holding bar capable of enabling the cart to be moved by two operators.

7. The modular cart according to any of the preceding claims wherein the front and/or rear frame (12; 13) comprises hinge means (4) for folding it back onto the rest of the chassis (2).

8. The modular cart according to any of the preceding claims wherein the chassis (2) is made of a non-metal material.

9. The modular cart according to any of the preceding claims, including two to four positioning bars (15) each equipped with 1 to 5 sensors (7).

10. The modular cart according to any of the preceding claims 2 to 9 wherein the chassis (2) comprises means for measuring the tilt of the plane P relative to the horizontal or vertical plane for correcting the measurement of the sensors (7).
